# EUROPÄISCHE PATENTANMELDUNG

(11) **EP 0 716 259 A1**
(43) Veröffentlichungstag der Anmeldung: **12.06.1996**
(21) Anmeldenummer: 95118771.5
(22) Anmeldetag: 29.11.1995
(51) Int. Cl.: F16L 21/02, F16L 49/02, F23J 13/04

(54) **Fugenverbindung für Rohre, insbesondere Kaminrohre aus Keramik**

(30) Priorität: 07.12.1994 DE 4443603
(71) Anmelder: Steinzeugwerk Ponholz GmbH & Co. KG, D-93142 Maxhütte-Haidhof (DE)
(72) Erfinder: Dirscherl, Josef, D-93158 Teublitz (DE); Mulzer, Karl-Heinz, D-93142 Maxhütte-Haidhof (DE)
(74) Vertreter: Reinhard - Skuhra - Weise & Partner

(57) **Zusammenfassung**

Die Erfindung betrifft eine Fugenverbindung für Rohre, insbesondere Kaminrohre aus Keramik, für mehrschalige Schornsteine, bei der die Fuge (5,6) zwischen zwei aufeinanderfolgenden Rohren mit einem Fugenkitt (8) und einer elastischen Dichtung (10) abgedichtet ist, wobei die elastische Dichtung (10) in dem radial außen liegenden Fugenbereich (6) angeordnet ist, die Fuge zwischen dem Spitzende (1) und dem Muffenende (2) zweier Rohre über einen sich radial erstreckenden ersten Bereich (5) und einen sich koaxial zur Rohrachse erstreckenden zweiten Bereich (6) verläuft, der Fugenkitt (8) wenigstens in den ersten Bereich (5) eingebracht ist, während die elastische Dichtung (10) zwischen der Innenfläche des Muffenendes (2) eines Rohrs und der Außenfläche des Spitzendes (1) des anderen Rohres vorgesehen ist.

## Beschreibung

Die Erfindung betrifft eine Fugenverbindung für Rohre, insbesondere Kaminrohre aus Keramik, gemäß dem Oberbegriff des Patentanspruchs 1.

Aus der EP 0 353 658 ist eine Fugenverbindung für Rauchgasrohre bekannt, bei der eine insbesondere radial außen liegende elastische Dichtung als verlorene Schalung benützt wird, während in der sich radial erstreckenden Fuge zusätzlich Fugenkitt vorgesehen ist, der in dem Fugenbereich bis hin zur elastischen Dichtung verläuft.

Der Erfindung liegt die Aufgabe zugrunde, eine Fugenverbindung der eingangs genannten Art derart auszubilden, daß sie bei Muffenrohren, insbesondere Muffenkaminrohren, eine dauerhafte Abdichtung gewährleistet und zugleich auf einfache Weise vorgenommen werden kann.

Diese Aufgabe wird erfindungsgemäß durch die im kennzeichnenden Teil des Patentanspruchs 1 angegebenen Merkmale gelöst.

Weitere Ausgestaltungen der Erfindung ergeben sich aus den Unteransprüchen.

Die Erfindung schafft eine Fugenverbindung für Muffenrohre, insbesondere Muffenkaminrohre, die aus Keramik hergestellt sind und insbesondere für mehrschalige Schornsteine Anwendung finden.

Die Erfindung bezieht sich insbesondere auf Muffenkaminrohre für mehrteilig aufgebaute Schornsteinanlagen, die im allgemeinen eine Außenschale und die Muffenkaminrohre als Innenrohre aufweisen, wobei gegebenenfalls zwischen der Außenschale und den Innenrohren eine Dämmschicht angeordnet ist.

Gemäß der Erfindung wird eine Fugenverbindung bzw. Muffenabdichtung geschaffen, bei der sich der Fugenkitt innerhalb der sich radial erstreckenden Fuge befindet und darüber hinaus einen Teil des sich parallel zur Achse erstreckenden Fugenbereichs ausfüllt. Am oberen Ende der koaxial zur Achse verlaufenden Fuge zwischen Muffenende und Spitzende ist gemäß vorliegender Erfindung eine Dichtung vorgesehen, die zwischen Muffenende und Spitzende umlaufend vorgesehen ist. Die Dichtung aus elastischem Material liegt in einer Höhe des Spitzendes derart, daß sie etwa in der Höhe des Muffenrandes oder unterhalb des Muffenrandes zu liegen kommt.

Nachfolgend wird die erfindungsgemäße Fugenverbindung anhand der Zeichnung zur Erläuterung weiterer Vorteile und Merkmale beschrieben. Es zeigen:
Fig. 1 eine teilweise im Schnitt gehaltene Darstellung zur Erläuterung der erfindungsgemäßen Fugenverbindung bei Muffenkaminrohren,
Fig. 2 eine vergrößerte Detailansicht des Fugenverlaufs entsprechend Fig. 1, und
Fig. 3 bis 6 abgewandelte Ausführungsformen der erfindungsgemäßen Fugenverbindung.

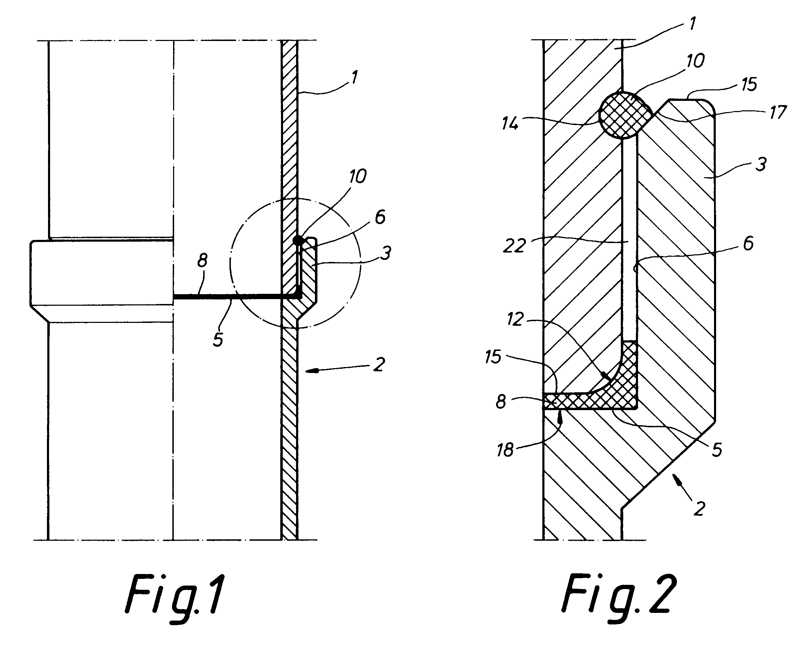

Entsprechend Fig. 1 ist ein mit 1 bezeichnetes Spitzende eines ersten Muffenkaminrohres in ein Muffenende 2 eines weiteren Muffenkaminrohres eingesetzt. An dem Muffenende 2 ist eine umlaufende Muffe 3 ausgebildet, deren Außendurchmesser größer ist als der Außendurchmesser des übrigen Rohres. Zwischen dem Spitzende 1 und dem Muffenende 2 verläuft ein erster, sich radial erstreckender Fugenbereich 5 über die Stärke des Rohres radial nach außen. An den radial sich erstreckenden bzw. ringförmigen Fugenbereich 5 schließt sich ein koaxial zur Achse nach oben verlaufender Fugenbereich 6 an, so daß die sich aus den Bereichen 5 und 6 ergebende Gesamtfuge etwa L-förmiges Profil hat. Das Spitzende 1 ist in das Muffenende 2 eingeschoben, wie Fig. 1 zeigt.

Gemäß der Erfindung ist die Fugenverbindung durch einen Fugenkitt, vorzugsweise in Form einer amorphen oder elastischen Dichtungsmasse 8 und einer elastischen Dichtung 10 gebildet. Der Fugenkitt 8 füllt gemäß Fig. 1 den ersten Fugenbereich 5 aus und zu einem geringeren Teil den zweiten Fugenbereich 6. Gemäß Fig. 2 ist vorgesehen, daß der Fugenkitt 8 den Bereich 6 nur über einen geringen Teil seiner Gesamthöhe ausfüllt, d.h. um eine Krümmung bzw. einen Rand 12 des Spitzendes 1 herum nach oben geführt ist. Wie sich weiter aus Fig. 2 ergibt, wird entlang des in Fig. 2 vertikal sich erstreckenden Fugenbereichs 6 ein Luftraum zwischen dem Fugenkitt 8 und der Dichtung 10 eingehalten.

Die Dichtung 10 besteht aus elastischem bzw. flexiblem Material und wird vorzugsweise in Form eines Silikonringes vorgesehen, der in eine umlaufende Nut 14 in der Außenfläche des Spitzendes 1 eingesetzt ist. Die Nut 14 hat von einer mit 15 bezeichneten Stirnfläche des Spitzendes eine Höhe, die etwa der Höhe der Muffe 3 entspricht, so daß die Dichtung 10 bei in das Muffenende 2 eingeschobenem Spitzende 1 etwa in Höhe eines mit 15 bezeichneten Muffenrandes zu liegen kommt.

Bei der Ausführungsform nach Fig. 2 ist vorgesehen, daß der Muffenrand in Richtung auf die Rohrachse durch eine Abschrägung 17 abgeschrägt ist, infolgedessen die Dichtung 10 beim Einsetzen des Spitzendes 1 in das Muffenende 2 dicht an der Abschrägung 17 des Muffenrandes 15 zur Anlage gelangt.

Abhängig von dem Volumen an Fugenkitt 8, der vor dem Zusammenbau von Spitzende 1 und Muffenende 2 auf eine mit 18 angedeutete Bodenfläche der Muffe aufgebracht wird, steigt der Fugenkitt 8 innerhalb des Fugenbereichs 6 nach oben. Bevorzugterweise erstreckt sich der Fugenkitt 8 aber nur geringfügig entlang des Bereichs 6 nach oben, wie Fig. 2 zeigt, und es ist nicht beabsichtigt, den gesamten Fugenbereich 6 bis hin zur Dichtung 14 mit Fugenkitt auszufüllen. Auf diese Weise läßt sich erheblich Material an Fugenkitt einsparen.

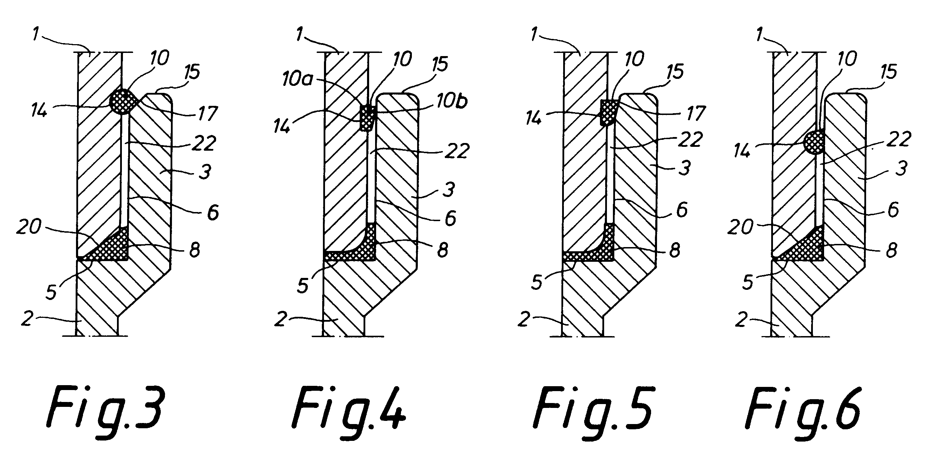

Nachfolgend wird auf die Fig. 3 bis 6 Bezug genommen. Gleiche Bezugszeichen veranschaulichen die gleichen Teile, wie sie bereits in Verbindung mit Fig. 1 und 2 beschrieben sind.

Gemäß Fig. 3 ist das Spitzende 1 an seinem dem Muffenboden 18 zugewandten Ende abgeschrägt, wie dies durch die Abschrägung 20 gezeigt ist. Das Spitzende 1 weist also eine umlaufende Schrägfläche 20 auf, mit der Folge, daß zwischen der Muffe 3 und dem Spitzende 1 ein größerer, mit Fugenkitt 8 auszufüllender Raum geschaffen wird, der bei der dargestellten Ausführungsform nach Fig. 3 im wesentlichen dreieckigen Querschnitt hat. Auch bei der Ausführungsform nach Fig. 3 erstreckt sich somit der Fugenkitt 8 zuerst über einen weitgehend radial verlaufenden Bereich 5, dann in den sich in einen etwa dreieckförmigen Querschnitt erweiternden Raum, bis zu einer vorgegebenen Höhe entlang des Fugenbereichs 6. Somit ist auch bei der Ausführungsform nach Fig. 3 ein Luftspalt entlang des Bereiches 6 zwischen dem Fugenkitt 8 und der Dichtung 10 vorhanden. Die Dichtung 10, die in die Umfangsnut 14 des Spitzendes 1 eingesetzt ist, liegt in dichtender Anlage zur Schrägfläche 17 des Muffenrandes 3.

Gemäß den Fig. 1 bis 3 wird eine Dichtung 10 vorgesehen, die weitgehend kreisrunden Querschnitt hat und die bereits vor dem Einsetzen des Spitzendes 1 in das Muffenende 2 auf den Umfang des Spitzendes 1 aufgesetzt ist.

Fig. 4 zeigt eine weitere Abwandlung der erfindungsgemäßen Fugenverbindung. Gemäß Fig. 4 besteht die Dichtung 10 aus einem etwa V-förmigen Dichtungsstreifen. Zur Aufnahme der Dichtung 10 ist das Spitzende 1 mit einer umlaufenden Nut 14 versehen, die im Gegensatz zu der Ausführungsform nach Fig. 1 bis 3 keinen halbkreis- oder teilkreisförmigen Boden hat, sondern einen geraden und koaxial zur Rohrachse verlaufenden Nutboden. Somit sitzt ein Schenkel 10a der Dichtung 10 in der Nut 14, während der zweite Schenkel 10b nach außen in Richtung auf eine mit 22 bezeichnete Innenfläche des Muffenrandes 13 weist. Die Öffnung des V-förmigen Profiles der Dichtung 10 ist gemäß Fig. 4 nach oben gerichtet.

Hinsichtlich der Abdichtung durch Fugenkitt 8 entlang des ersten und zweiten Fugenbereichs 5, 6 wird auf die Ausführungen zu Fig. 1 und 2 Bezug genommen.

Fig. 5 veranschaulicht eine weitere Ausführungsform der Fugenverbindung, bei der eine Dichtung 10 Einsatz findet, die eine im wesentlichen gerade verlaufende Anlagefläche hat, welche auf dem entsprechend der Erläuterung nach Fig. 4 gerade ausgebildeten, d.h. koaxial zur Rohrachse verlaufenden, geraden Nutboden der Nut 14 aufliegt. Die nach außen weisende Fläche der Dichtung 10 ist gekrümmt, wobei der Krümmungsradius in Richtung auf den Muffenrand 15 zunehmen kann.

Bei den Ausführungsformen nach Fig. 1 bis 5 ist die Dichtung 10 in einer Höhe zur Stirnfläche 15 des Spitzendes 1 vorgesehen, die etwa der Höhe der Muffe 3 entspricht, so daß die Dichtung 10 etwa im Bereich der Schrägfläche 17 oder gemäß Fig. 4 unterhalb des Muffenrandes 15 an der Innenfläche der Muffe 3 zur Anlage gelangt.

Fig. 6 veranschaulicht eine Ausführungsform der Fugenverbindung, bei welcher die etwa halbkreisförmige oder teilkreisförmige Nut 14 in einer geringeren Höhe als in Fig. 1 bis 5 gezeigt am Außenumfang des Spitzendes 1 vorgesehen ist, und die Dichtung 10 im zusammengesetzten Zustand gemäß Fig. 6 unterhalb des Muffenrandes 15 zu liegen kommt. Hinsichtlich der Dichtung durch Fugenkitt 8 in den Fugenbereichen 5 und 6 wird auf die vorangehenden Ausführungen Bezug genommen. Bei der Ausführungsform nach Fig. 6 ist das Spitzende in einer Weise dargestellt, die etwa Fig. 3 entspricht, d.h. daß das Spitzende 1 eine Abschrägung 20 aufweist.

Die Erfindung schafft eine Fugenverbindung, insbesondere für Muffenrohre mehrschaliger Schornsteine, mit der die Herstellung einer einfachen und dauerhaften Abdichtung unter Verwendung wenigstens zweier unterschiedlicher Materialien ermöglicht wird. Gemäß der Erfindung ist vorgesehen, den Fugenkitt vor dem Einschieben des Spitzendes 1 in das Muffenende 2 auf den Boden 18 des Muffenendes 3 aufzutragen, wonach dann das Spitzende 1 mit der bereits in die am Spitzende ausgeprägte Nut 14 eingebrachte Dichtung 10 eingeschoben wird, und zwar so weit, bis die Dichtung 10 entweder am Muffenrand 15 oder einer am Muffenrand ausgebildeten Abschrägung 17 zur Anlage gelangt oder in die Muffe 3 hinein entsprechend den Fig. 4 und 6 verbracht wird. Auf diese Weise wird eine Abdichtung speziell im Bereich 5 der Fuge und/oder teilweise im Bereich 6 der Fuge durch den Fugenkitt 8 gewährleistet und eine weitere Abdichtung durch die elastische Dichtung 10 in der Nähe des Muffenrandes 15 zwischen dem Spitzende 1 und der Muffe 3.

Wie aus der vorstehenden Beschreibung ersichtlich ist, betrifft die Erfindung die Muffenabdichtung zwischen zwei zusammengesetzten Rohren. Die jeweilig zu verbindenden Rohre haben gleichen Außendurchmesser, wobei sich ein Ende jedes Rohres in eine Muffe 3 derart erweitert, daß der Innendurchmesser des Muffenendes 3 etwas größer ist als der Außendurchmesser des übrigen Rohres bzw. des in die Muffe 3 einzusetzenden Rohres.

Die Muffe 3 ergibt einen den Nutabschnitt 5 definierenden ringförmigen Rand bzw. eine ringförmige Stirnfläche, die zum Spitzende 1 weist. Der Nutabschnitt 5 wird somit durch die zum Spitzende 1 weisende ringförmige Fläche einerseits und die zum Muffenende 2 weisende Ringfläche bzw. Stirnfläche des Spitzendes 1 definiert. Der Nutabschitt 6 befindet sich in dem Ringraum zwischen der Muffe 3 und dem Spitzende 1.

Die Dichtung 10, die sich in dem Nutbereich 6 befindet, ist in axialem Abstand zu dem Fugenkitt 8 vorgesehen.

## Patentansprüche

1. Fugenverbindung für Rohre, insbesondere Kaminrohre aus Keramik, für mehrschalige Schornsteine,
bei der die Fuge zwischen zwei aufeinanderfolgenden Rohren mit einem Fugenkitt und einer elastischen Dichtung abgedichtet ist,
wobei die elastische Dichtung in dem radial außen liegenden Fugenbereich angeordnet ist,
**dadurch gekennzeichnet**,
daß die Fuge (5,6) zwischen dem Spitzende (1) und dem Muffenende (2) zweier Rohre über einen sich radial erstreckenden ersten Bereich (5) und einen sich koaxial zur Rohrachse erstreckenden zweiten Bereich (6) verläuft,
daß der Fugenkitt (8) wenigstens in den ersten Bereich (5) eingebracht ist, während die elastische Dichtung (10) zwischen der Innenfläche (22) des Muffenendes (2) eines Rohrs und der Außenfläche des Spitzendes (1) des anderen Rohres vorgesehen ist.

2. Fugenverbindung nach Anspruch 1,
**dadurch gekennzeichnet**,
daß das Spitzende (1) in vorbestimmter Höhe eine umlaufende Nut (14) zur Aufnahme der elastischen Dichtung (10) aufweist.

3. Fugenverbindung nach Anspruch 2,
**dadurch gekennzeichnet**,
daß die umlaufende Nut (14) in einer solchen Höhe des Spitzendes (1) ausgebildet ist, daß sie etwa in der Höhe des Muffenrandes (15) des zugeordneten Muffenendes (2) zu liegen kommt.

4. Fugenverbindung nach wenigstens einem der vorangehenden Ansprüche,
**dadurch gekennzeichnet**,
daß der Fugenkitt (8) wenigstens einen Teil des zweiten Bereiches (6) ausfüllt und gegenüber der Dichtung (10) beabstandet ist.

5. Fugenverbindung nach wenigstens einem der vorangehenden Ansprüche,
**dadurch gekennzeichnet**,
daß das Spitzende (1) eine umlaufende Schrägfläche (20) aufweist.

6. Fugenverbindung nach wenigstens einem der vorangehenden Ansprüche,
**dadurch gekennzeichnet**,
daß die umlaufende Nut (14) einen gekrümmten oder geraden Nutboden enthält.

7. Fugenverbindung nach wenigstens einem der vorangehenden Ansprüche,
**dadurch gekennzeichnet**,
daß der Rand (15) des Muffenendes (2) mit einer Abschrägung (17) versehen ist.

8. Fugenverbindung nach wenigstens einem der vorangehenden Ansprüche,
**dadurch gekennzeichnet**,
daß die Dichtung (10) durch einen Dichtungsring gebildet ist.
